(19) **Europäisches Patentamt / European Patent Office / Office européen des brevets**

(11) **EP 4 421 037 A1**

(12) **EUROPEAN PATENT APPLICATION**
published in accordance with Art. 153(4) EPC

(43) Date of publication:
**28.08.2024 Bulletin 2024/35**

(21) Application number: **22883382.8**

(22) Date of filing: **07.10.2022**

(51) International Patent Classification (IPC):
**$C01B\ 33/18$ (2006.01)**

(52) Cooperative Patent Classification (CPC):
**C01B 33/18; C08K 3/36**

(86) International application number:
**PCT/JP2022/037591**

(87) International publication number:
**WO 2023/068078 (27.04.2023 Gazette 2023/17)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **20.10.2021 JP 2021171458**

(71) Applicant: **Denka Company Limited**
**Tokyo 103-8338 (JP)**

(72) Inventors:
• **OKABE, Takuto**
 **Tokyo 103-8338 (JP)**
• **FUKAZAWA, Motoharu**
 **Tokyo 103-8338 (JP)**
• **KUBOBUCHI, Kei**
 **Tokyo 103-8338 (JP)**
• **EBISUZAKI, Takako**
 **Tokyo 103-8338 (JP)**

(74) Representative: **Kraus & Lederer PartGmbB**
**Thomas-Wimmer-Ring 15**
**80539 München (DE)**

(54) **SPHERICAL SILICA PARTICLES, AND RESIN COMPOSITION USING SAME**

(57) Provided are spherical silica particles that can achieve a lower dielectric dissipation factor when used to fill a resin, and a resin composition using the same.

Spherical silica particles (X) are those having a surface fractal dimension of 1.0-2.3. The resin composition contains the spherical silica particles (X) and at least one resin selected from a thermoplastic resin and a thermosetting resin. The specific surface area of the spherical silica particles (X) is preferably 0.1-2.0 m²/g. The average particle diameter of the spherical silica particles (X) is preferably 1-30 μm.

[FIG. 1]

1 μm

EP 4 421 037 A1

**Description**

TECHNICAL FIELD

The present invention relates to spherical silica particles and a resin composition using the same.

BACKGROUND ART

With increases in the amount of information communication in the communications field in recent years, the application of high-frequency band signals in electronic equipment, communication equipment, etc. has become more widespread. Meanwhile, there have also been problems in that applying high-frequency band signals in the foregoing equipment increases the transmission loss of circuit signals. Due thereto, with regard to materials to be used in high-frequency band devices, there is a demand for materials having a low dielectric dissipation factor. Transmission loss, broadly, comprises conductor loss due to the skin effect in wiring, and dielectric loss due to the properties of dielectric materials in insulators constituting electrical/electronic components, such as substrates. Dielectric loss is proportional to the first power of the frequency, to the square root of the dielectric constant of an insulator, and to the first power of the dielectric dissipation factor, and therefore the materials used for equipment for high-frequency bands are required to have both a low dielectric constant and a low dielectric dissipation factor.

The dielectric properties of GHz-band ceramic materials are described, for example, in Non-Patent Document 1, etc. However, the properties are all for sintered substrates. Silica has a relatively low dielectric constant and has a quality factor index Qf (the value obtained by multiplying the inverse of the dielectric dissipation factor with the measurement frequency) of about 120,000, and is therefore a promising ceramic filler having a low dielectric constant and a low dielectric dissipation factor. From the perspective of facilitating blending into resins, the closer the shape is to a spherical shape, the more preferable it is. Spherical silica particles can be produced, for example, with a flame fusion method, etc. (Patent Document 1). Spherical silica particles synthesized with such a method are expected to be applied to the above-mentioned equipment for high-frequency bands.

Meanwhile, there are many polar functional groups such as adsorbed water and silanol groups on the surface of the spherical silica particles, and there is a problem in that the dielectric dissipation factor readily worsens. Methods for reducing the adsorbed water or silanol groups on the surface of spherical silica particles are described in, for example, Patent Documents 2-4, etc., but the spherical silica particles obtained by these methods are not effective enough in reducing the dielectric dissipation factor.

Patent Document 1: WO 2016/031823 A

Patent Document 2: JP 2926348 B

Patent Document 3: JP 2020-097498 A

Patent Document 4: JP 2020-138880 A

Non-Patent Document 1: International Materials Reviews, vol. 60, No. 70, Supplementary data (2015)

SUMMARY OF THE INVENTION

Thus, the objective of the present invention is to provide spherical silica particles that can achieve a lower dielectric dissipation factor when used to fill a resin, and a resin composition using the same.

The present inventors focused on and evaluated the surface condition of the spherical silica particles and discovered that spherical silica particles in which the surface fractal dimension, which is an index representing the uneven shape of the particle surface, is in a certain numerical range can achieve a lower dielectric dissipation factor, thereby completing the present invention.

That is, the present invention has the following aspects.

[1] Spherical silica particles (X) having a surface fractal dimension of 1.0-2.3.

[2] The spherical silica particles (X) according to [1], wherein the spherical silica particles (X) have an average circularity of 0.85 or more.

[3] The spherical silica particles (X) according to [1] or [2], wherein the spherical silica particles (X) have a specific surface area of 0.1-2.0 m$^2$/g.

[4] The spherical silica particles (X) according to any one of [1] to [3], wherein the spherical silica particles (X) have an average particle diameter of 1-30 μm.

[5] The spherical silica particles (X) according to any one of [1] to [4], wherein the spherical silica particles (X) are surface treated with a surface treatment agent.

[6] The spherical silica particles (X) according to any one of [1] to [5], wherein the spherical silica particles (X) are for filling a resin.

[7] A resin composition comprising the spherical silica particles (X) according to any one of [1] to [6] and at least one resin selected from a thermoplastic resin and a thermosetting resin.

According to the present invention, it is possible to provide spherical silica particles that can achieve a lower dielectric dissipation factor when used to fill a resin, and a resin composition using the same.

BRIEF DESCRIPTION OF DRAWINGS

FIG. 1 is an electron microscope photograph showing one aspect of a spherical silica particle according to the present invention.

FIG. 2 is an electron microscope photograph of an amorphous spherical silica particle before a classification treatment.

DESCRIPTION OF EMBODIMENTS

Hereinafter, the present invention will be explained in detail. The present invention is not limited to the aspects below and may be implemented by adding appropriate modifications within a range not inhibiting the effects of the present invention. In cases where the specific explanation provided for one embodiment applies to another embodiment, the corresponding explanation for the other embodiment is omitted. Note that herein, "-" with regard to numerical ranges means "... or more and ... or less". For example, "1.0-2.3" means "1.0 or more and 2.3 or less". Moreover, note that herein, "spherical silica particles" means silica particles which, when observed with a microscope or the like, have a projected view (including stereoscopic and planar views) with a shape close to circular. Moreover, "a silica particle" means an aggregate of multiple particles.

[Spherical Silica Particles (X)]

The spherical silica particles (X) according to the present invention are characterized by having a surface fractal dimension of 1.0-2.3. Here, the "surface fractal dimension" is an index representing the uneven shape of the particle surface. The lower the numerical value of the surface fractal dimension, the lower the unevenness on the particle surface, meaning that the particle has a smooth surface. Due to the spherical silica particles (X) according to the present invention having a surface fractal dimension of 1.0-2.3, when the particles are blended in a resin, a lower dielectric dissipation factor can be achieved. Note that the surface fractal dimension (hereinafter, sometimes referred to as "surface fractal dimension (Ds)") of the spherical silica particles (X) can be measured with the following method.

<Method of Measuring Surface Fractal Dimension>

Spherical silica particles are placed, as is, in a sample cell for transmission measurement with an X-ray diffraction analyzer (e.g., product name: SmartLab manufactured by Rigaku Corporation), and the particles are measured with an ultra-small-angle X-ray scattering (USAXS) method under the following conditions. In addition, background subtraction and a desmearing process are performed during analysis. The desmearing process is performed using analysis software (e.g., product name: NANO-Solver: Particle size and pore size analysis software produced by Rigaku Corporation).

X-ray tube bulb: Cu Kα,

Tube voltage/tube current: 45 kV/200 mA

Detector: scintillation counter

Scanning range: 0.00-0.50 deg

Scanning step: 0.0006 deg

Scanning speed: 0.03 deg/min.

Incident-side analyzing crystals: Ge (220) $\times$ 2

Light-receiving side dispersive crystal: Ge (220) $\times$ 2

<Method of Calculating Surface Fractal Dimension>

The surface fractal dimension is calculated with the following method. First, a scattering angle $2\theta$ is converted into a scattering vector q using the following formula (1). The measurement X-ray wavelength $\lambda$ is set to 0.154 nm.

$$q = 4\pi \sin\theta/\lambda \ldots (1)$$

Next, a double-logarithmic graph showing the relationship between the scattering vector q and intensity I(q) is created with respect to a USAXS pattern on which the background subtraction and desmearing process were performed, and a power approximation is performed at q = 0.0124-0.0627 $nm^{-1}$ ($2\theta$ = 0.174-0.0882°). The exponent part $\alpha$ in the approximate formula is substituted into the following formula (2) to calculate the surface fractal dimension (Ds).

$$Ds = 6+\alpha \ldots (2)$$

The spherical silica particles (X) according to the present invention have a surface fractal dimension of 1.0-2.3, more preferably 1.0-2.1, and yet more preferably 1.0-1.9.

As mentioned above, there are polar functional groups such as silanol groups and adsorbed water on the surface of the silica particles, and these are factors that worsen the dielectric dissipation factor. The present inventors focused on and evaluated the surface condition of the spherical silica particles and discovered, to their surprise, that the spherical silica particles (X) in which the surface fractal dimension is in the above-mentioned range can achieve a lower dielectric dissipation factor than conventional spherical silica particles. The spherical silica particles (X) having a surface fractal dimension within the range of 1.0-2.3 have low unevenness and the surface thereof is very smooth. It is assumed that such spherical silica particles (X) have lower absolute amounts of polar functional groups and adsorbed water on the particle surface, and as a result, can achieve a lower dielectric dissipation factor.

To keep the surface fractal dimension of the spherical silica particles (X) within the above-mentioned range, it is preferable to reduce the number of foreign substances adhering to the surface of the spherical silica particles (X) to reduce particle surface unevenness.

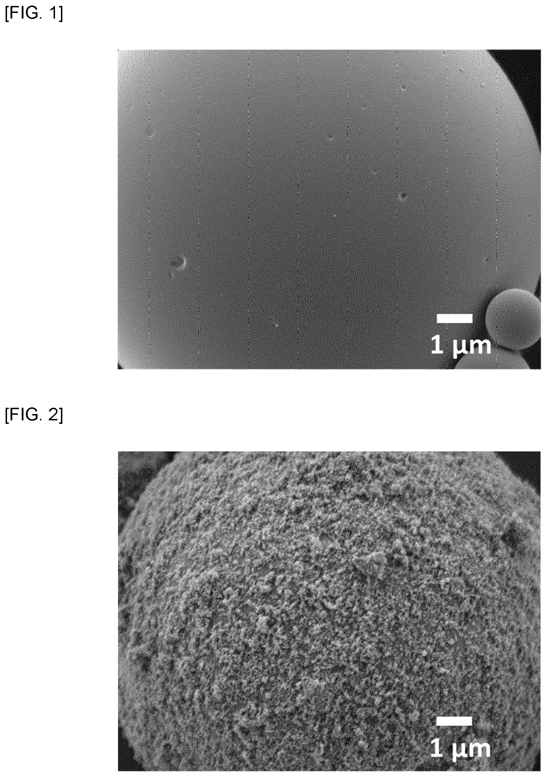

FIG. 1 is an electron microscope photograph showing one aspect of the spherical silica particle (X) according to the present invention, that is, the spherical silica particle (X) having a surface fractal dimension of 1.0-2.3. As shown in FIG. 1, the spherical silica particles (X) according to the present invention have few foreign substances on the particle surface and are particles with low surface unevenness. In addition, the surface thereof is very smooth.

Examples of the method of reducing foreign substances on the surface of the spherical silica particles (X) include a method of classification treatment of raw silica particles under wet conditions, etc. The production method of the spherical silica particles (X) according to the present invention will be explained below.

As mentioned above, the spherical silica particles (X) according to the present invention have few foreign substances on the particle surface and have low surface unevenness. Due thereto, the spherical silica particles (X) according to the present invention may have a specific surface area of preferably 0.1-2.0 $m^2$/g, more preferably 0.3-2.0 $m^2$/g, and yet more preferably 0.5-2.0 $m^2$/g. In addition, the above-mentioned specific surface area may be in the range of 0.7-1.8 $m^2$/g. In one embodiment, the above-mentioned specific surface area may be 0.1-0.7 $m^2$/g or 0.1-0.5 $m^2$/g. The spherical silica particles (X) according to the present invention have few foreign substances on the particle surface, and therefore the specific surface area is likely to be a relatively small value. Thus, the small specific surface area makes it easier to reduce the absolute number of polar functional groups, such as adsorbed water and silanol groups, on the surface of the silica particles. As a result, it is easier for the spherical silica particles (X) according to the present invention to simultaneously achieve a low dielectric constant and a low dielectric dissipation factor when used to fill a resin. Note that the specific surface area of the spherical silica particles can be measured with the BET method.

<Method of Measuring Specific Surface Area>

A measurement cell is filled with 1 g of the spherical silica particles, and the specific surface area of the spherical silica particles is measured using a fully automated specific surface area and diameter measuring device (e.g., product name: Macsorb HM model-1201 (BET single point method) manufactured by MOUNTECH Co., Ltd.). Note that the degasification conditions prior to the measurement can be set to 200°C for ten minutes.

The spherical silica particles (X) according to the present invention have an average circularity of preferably 0.85 or more, more preferably 0.90 or more, and yet more preferably 0.94 or more. Due to the average circularity of the spherical silica particles (X) being 0.85 or more, when the spherical silica particles (X) are mixed with a resin, dispersibility into the resin is more likely to improve and the dielectric properties are more likely to be stable. Moreover, since the viscosity of the resin increases, it becomes easier to prevent fluidity from decreasing, and processability and filling properties do not readily deteriorate. Further, it is easier to adjust the specific surface area to a preferred range. Note that herein, "dielectric properties are stable" indicates that there is little variation of values, among measurement locations, when measuring the dielectric constant and dielectric dissipation factor of the resin composition including the spherical silica particles (X).

The "average circularity" of the spherical silica particles (X) can be calculated with the following method.

<Average Circularity>

After fixing the spherical silica particles with carbon tape, an osmium coating is applied. Thereafter, the particles are photographed at a magnification of 500-50,000 using a scanning electron microscope (e.g., product name: JSM-7001F SHL manufactured by JEOL Ltd.), a projected area (S) and a projected perimeter (L) of one particle are calculated using an image analysis device (product name: Image-Pro Premier Ver. 9.3 manufactured by Nippon Roper K.K.), and then the circularity is calculated with the following formula (1). Circularities are calculated for 200 arbitrary particles and the average value thereof is used as the average circularity.

$$\text{Circularity} = 4\pi S/L^2 \ \ldots \ (3)$$

The spherical silica particles (X) according to the present invention have an average circularity of preferably 1-30 $\mu$m, more preferably 1-15 $\mu$m, and yet more preferably 1-6 $\mu$m. When the average particle diameter of the spherical silica particles (X) is within the above ranges, the filling properties for a resin is likely to be better, and adjusting the values of the dielectric constant and dielectric dissipation factor of the resin composition is likely to be easier. Note that the average particle diameter of the spherical silica particles (X) indicates a particle diameter (D50) corresponding to a cumulative value of 50% in a volume-based cumulative particle size distribution measured using a laser diffraction particle size distribution measuring device. The cumulative particle size distribution is expressed as a distribution curve in which the horizontal axis represents the particle diameter ($\mu$m), and the vertical axis represents the cumulative value (%).

The spherical silica particles (X) according to the present invention may be surface treated with a surface treatment agent. By being surface treated with a surface treatment agent, the spherical silica particles (X) according to the present invention are likely to have better filling properties to a resin. Moreover, the polar functional groups, etc. on the particle surface can be reduced more easily, making it easier to obtain spherical silica particles that can achieve a lower dielectric dissipation factor. Examples of the surface treatment agent include silane coupling agents, aluminate coupling agents, and the like. The foregoing may be used alone or in a combination of two or more. Among these, from the perspective of easily reducing polar functional groups, etc. on the particle surface, it is preferable to treat the spherical silica particles (X) with a silane coupling agent, and it is more preferable to use a silane coupling agent having silazane such as hexamethyldisilazane (HMDS) and a vinyl group such as vinyl trimethoxysilane. Note that the presence or absence of the surface treatment of the spherical silica particles (X) can be confirmed by analyzing the spherical silica particles (X) using, for example, IR, TG-DTA, mass spectrometry, and the like.

The spherical silica particles (X) according to the present invention may have a number of water molecules desorbed (hereinafter, referred to as "desorbed water molecular weight") when heated from 50°C to 1000°C at a rate of temperature increase of 25°C/min. of 0.001-0.010 mmoL/g. When the desorbed water molecular weight is within the above-mentioned range, it is easier to achieve a lower dielectric dissipation factor. The above-mentioned desorbed water molecular weight is more preferably 0.001-0.008 mmoL/g, yet more preferably 0.002-0.008 mmoL/g, and especially preferably 0.003-0.007 mmoL/g. The desorbed water molecular weight can be measured with the following method. In one embodiment, the desorbed water molecular weight may be 0.001-0.004 mmoL/g or 0.001-0.003 mmoL/g.

<Method of Measuring Number of Desorbed Water Molecules>

A gas chromatograph mass spectrometer (e.g., product name: JMS-Q1500GC manufactured by JEOL Ltd.) and a pyrolysis apparatus (e.g., product name: PY-3030D manufactured by Frontier Laboratories Ltd.) are used to heat 15 μg of spherical silica particles from 50°C to 1000°C at a rate of temperature increase of 25°C/min. under a helium atmosphere. The area value of the obtained mass chromatogram (m/z = 18) in the range of 50°C to 1000°C is calculated, and the number of the desorbed water molecules is calculated from a calibration curve. As the calibration curve, the area value of the number of desorbed water molecules (m/z = 18) of an aluminum hydroxide reference sample (e.g., product name: aluminum hydroxide (purity: 59.5%) manufactured by Kojundo Chemical Lab. Co., Ltd.) is used. Specifically, 23 μg, 122 μg, and 270 μg of the aluminum hydroxide sample are accurately weighed using a microbalance and heated under the same conditions as above, and the area value of the water molecules desorbed from the aluminum hydroxide is measured, thereby creating a calibration curve. Note that the purity of the aluminum hydroxide herein is a value calculated, using a high-sensitivity differential thermal balance, from a decrease in the amount of mass in the range of 200°C to 320°C.

The spherical silica particles (X) according to the present invention have a crystalline structure in which the amorphous phase constitutes 95 mass% or more of the total. Setting the amorphous phase to 95% or more enhances the effect of suppressing the thermal expansion coefficient when filling a resin. Moreover, within the above range, other crystalline phases such as quartz and cristobalite may also be included.

The spherical silica particles (X) according to the present invention have an average particle density of preferably 1.8-2.4 g/cm$^3$, more preferably 1.9-2.4 g/cm$^3$, and yet more preferably 2.0-2.4 g/cm$^3$. When the average particle density is 1.8 g/cm$^3$ or more, the voids contained in the silica particles will not become too large in number, and mixing in the resin is likely to be good. If the average particle density is 2.4 g/cm$^3$ or less, the crystal structure of the silica particles is less likely to contain α-quartz, cristobalite, etc. Due thereto, adverse effects on the physical properties of the silica particles, such as an increase in the thermal expansion coefficient, are less likely to occur. Note that the "average particle density" of the spherical silica particles (X) can be calculated with the following method.

<Method of Measuring Average Particle Density>

2.0 g of the spherical silica particles are put in a sample cell for measurement, and the average particle density is measured with the gas (helium) displacement method using a dry-type density meter (e.g., product name: Accupic II 1340 manufactured by Shimadzu Corporation).

The spherical silica particles (X) according to the present invention can achieve a lower dielectric dissipation factor when used to fill a resin. In one embodiment, a resin sheet containing spherical silica particles (X) according to the present invention, prepared by the method described below, has a dielectric constant at 35 GHz of preferably 3.0 or less. Moreover, the above-mentioned resin sheet has a dielectric dissipation factor at 35 GHz of preferably 4.8 × 10$^{-4}$ or less, more preferably 4.5 × 10$^{-4}$ or less, and yet more preferably 4.0 × 10$^{-4}$ or less.

[Production Method of Spherical Silica Particles (X)]

Next, one embodiment of the production method of the spherical silica particles (X) according to the present invention will be explained below. Note that the production methods of the spherical silica particles (X) according to the present invention are not limited to the following production method.

The production method of the spherical silica particles (X) in the present embodiment includes classifying amorphous spherical silica particles (hereinafter, sometimes referred to as "spherical silica particles (A)") (step (i)), and thereafter heat treating at a temperature of 800-1200°C (step (ii)). Moreover, the production method of the spherical silica particles (X) in the present embodiment may include a step of preparing amorphous spherical silica particles (step (i')).

<Preparation Step: Step (i')>

The production method of the spherical silica particles (X) in the present embodiment may include a step (i') of preparing amorphous spherical silica particles (spherical silica particles (A)).

As the spherical silica particles (A), those prepared by conventionally known methods can be used. From the perspective of productivity, those prepared with the powder melting method are preferred. In the present embodiment, step (i') may be a step of preparing the spherical silica particles (A) with the powder melting method. Note that in the present invention, "amorphous spherical silica particles" means spherical silica particles with a silica purity of 98% or more and an amorphous phase that is 95 mass% or more of the total.

The powder melting method is a method that melts and forms spheres from crushed materials such as silica sand and silica stone (hereinafter, sometimes referred to as "crude material") under a high temperature condition at or above the melting point of the crude material using a flame, plasma, electric furnace, gas furnace, or the like. The melting atmosphere is not particularly limited, but from an economical perspective, it is preferable that the method is performed in an air atmosphere. The crude material preferably has an average particle diameter (D50) of 0.1-100 $\mu$m, more preferably 0.2-50 $\mu$m, and yet more preferably 0.3-10 $\mu$m. In one embodiment, the crude material may have an average particle diameter of 10-100 $\mu$m or 50-100 $\mu$m.

The spherical silica particles (A) have an average particle diameter (D50) (hereinafter, referred to as "average particle diameter (Da50)") which is preferably 1-30 $\mu$m, and more preferably 1-15 $\mu$m. In one embodiment, the average particle diameter (Da50) may be 1-10 $\mu$m or 2-8 $\mu$m. Moreover, from the perspective of being likely to adjust the average circularity of the finally obtained spherical silica particles (X) to 0.85 or more, the average circularity thereof is preferably 0.85 or more, and more preferably 0.90 or more. Further, the specific surface area (hereinafter, referred to as "specific surface area (Sa)") of the spherical silica particles (A) is not particularly specified, but can be, for example, 0.1-10 m$^2$/g. Note that the average particle diameter (Da50), average circularity, and specific surface area (Sa) of the spherical silica particles (A) can be measured with the same measuring method as for the above-mentioned spherical silica particles (X).

After performing step (i') as needed to obtain the spherical silica particles (A), the spherical silica particles (A) are classified as follows.

<Classification Step: Step (i)>

The production method of the spherical silica particles (X) in the present embodiment includes a step of classifying the spherical silica particles (A) (step (i)). Step (i) is a step of feeding the spherical silica particles (A) into a classifier and centrifuging the spherical silica particles (A) at a constant circumferential velocity, thereby removing fine particles from the spherical silica particles (A). Hereinafter, the spherical silica particles obtained after step (i) (after the classification treatment) are referred to as "spherical silica particles (B)".

As the classifier, for example, gravity field classifiers, centrifugal field classifiers, and the like can be used.

Step (i) is preferably a step of removing fine particles of 0.9 $\mu$m or less contained in the spherical silica particles (A). Step (i) is also preferably a step of removing fine foreign substances adhering to the surface of the spherical silica particles (A). "Foreign substances on the surface of the spherical silica particles (A)" refers, for example, to fine particles adhering to the surface of a spherical silica particle (A), as shown in FIG. 2. Classifying the spherical silica particles (A) and removing fine foreign substances from the particle surface makes it easier to obtain spherical silica particles (X) with low surface unevenness and a surface fractal dimension of 1.0-2.3. Step (i) may be a step of classifying spherical silica particles (A) to obtain spherical silica particles (B) with a surface fractal dimension of 1.0-2.3.

Step (i) may be a step of removing foreign substances from the surface of the spherical silica particles (A) to reduce the specific surface area of the spherical silica particles (A). In one aspect, the specific surface area (Sb) of the spherical silica particles (B) obtained after step (i) with respect to the specific surface area (Sa) of the spherical silica particles (A), that is, (Sb)/(Sa), may be 0.2 or more and 0.6 or less or 0.3 or more and 0.6 or less.

Step (i) may be a step of removing fine particles from the spherical silica particles (A) by dry classification or removing fine particles from the spherical silica particles (A) by wet classification. From the perspective of efficiently removing particles of 0.9 $\mu$m or less, wet classification is preferred.

(Wet Classification)

When step (i) is a step of wet classification, a slurry containing spherical silica particles (A) and a dispersion medium is fed into a classifier. When step (i) is a step of wet classification, for example, a gravity field classifier, centrifugal field classifier, and the like can be employed as the classifier.

Examples of the dispersion medium include water (including pure water, ion-exchanged water, etc.) and organic solvents such as ethanol and acetone. Among these, it is preferable that the dispersion medium includes at least water due to ease of dispersion of the spherical silica particles (A) and from an economic perspective.

The ratio of water in the dispersion medium is preferably 50-100 mass% with respect to the total mass of the dispersion medium. Moreover, the concentration of the spherical silica particles (A) in the slurry is preferably 1-50 mass% and more preferably 20-40 mass% with respect to the total mass of the slurry.

An example of a method of preparing a slurry is feeding spherical silica particles (A) into a dispersion medium such that a desired solid concentration is achieved, and then stirring at room temperature for 1-24 hours.

When using the classifier described in the examples below, the rotor circumferential velocity during wet classification is, from the perspective of efficiently classifying fine particles, preferably 10-30 m/s and more preferably 20-30 m/s.

Further, the temperature during wet classification is not particularly limited, but from an economic perspective, room temperature is preferred.

When step (i) is wet classification, the slurry after classification is set aside and the supernatant liquid is removed to obtain spherical silica particles (B). Thereafter, the spherical silica particles (B) are further heat treated to prepare spherical silica particles (X) as follows. Note that prior to step (ii), the spherical silica particles (B) may be dried at 40-200°C for 1-24 hours. The spherical silica particles (B) may also be dried under vacuum.

<Thermal Treatment Step: Step (ii)>

The production method of the spherical silica particles (X) in the present embodiment includes, after step (i), further heat treatment at a temperature of 800-1200°C. In step (ii), the heating temperature of the spherical silica particles (B) is 800-1200°C and is preferably 900-1100°C. As a heating device, for example, an electric furnace or gas furnace can be used. Moreover, from the perspective of reducing the water content, step (ii) is preferably performed under a nitrogen or argon atmosphere or under a vacuum atmosphere. Further, the heating time is preferably 1-24 hours and more preferably 2-8 hours. When the heating time is 1-24 hours, productivity is likely to be good. In one embodiment, step (ii) may be a heat treatment of the spherical silica particles (B) at 800-1200°C for 1-24 hours, or at 800-1200°C for 2-8 hours.

The method including steps (i) and (ii) mentioned above (the method including, as needed, step (i'), step (i), and step (ii)) makes it possible to obtain spherical silica particles (X). Note that after step (ii), the spherical silica particles (X) may be surface treated with a surface treatment agent as needed. Note that the spherical silica particles (X) obtained after step (i) or step (ii) or after any surface treatment step may be an aggregate. As such, after these steps, a disaggregation treatment may be carried out as needed. The disaggregation method is preferably performed under dry conditions without contact with moisture, and for example, an agate mortar, a ball mill, a vibrating mill, a jet mill, and the like can be employed.

The spherical silica particles (X) obtained by the production method in the present embodiment have a surface structure as shown, for example, in FIG. 1. Meanwhile, FIG. 2 is an electron microscope photograph showing one embodiment of an amorphous spherical silica particle before classification treatment (spherical silica particle (A)). As is clear from a comparison of FIGS. 1 and 2, a large amount of very fine foreign substances adheres to the surface of the spherical silica particle (A), and these fine foreign substances increase the specific surface area (Sa). According to the production method according to the present embodiment, step (i) makes it easier to remove fine foreign substances from the surface of the spherical silica particles (A), resulting in, as shown in FIG. 1, a spherical silica particle (X) with less foreign substances on the surface and low surface unevenness. Such spherical silica particles (X) have a surface fractal dimension in the range of 1.0-2.3, and therefore are likely to achieve a lower dielectric dissipation factor when filled into a resin. That is, the production method in the present embodiment is more preferably a method that satisfies conditions (1) and (2) below.

Condition (1): the ratio ((Dx50)/(Da50)) of the average particle diameter (Dx50) of the spherical silica particles (X) to the average particle diameter (Da50) of the spherical silica particles (A) is 0.8 or more and 1.2 or less.

Condition (2): the ratio ((Sx)/(Sa)) of the specific surface area (Sx) of the spherical silica particles (X) to the specific surface area (Sa) of the spherical silica particles (A) is 0.2 or more and 0.6 or less.

Satisfying the conditions (1) and (2) makes it easier to obtain spherical silica particles (X) with a small specific surface area while maintaining the range of the average particle diameter (Da50) of the spherical silica particle (A).

[Use]

The spherical silica particles (X) according to the present invention can achieve a low dielectric constant and a low dielectric dissipation factor when used to fill a resin. Due thereto, the spherical silica particles (X) can be suitably utilized as fillers for resin materials.

[Resin Composition]

The resin composition according to the present embodiment comprises the above-mentioned spherical silica particles (X) and at least one resin selected from a thermoplastic resin and a thermosetting resin.

The content of the spherical silica particles (X) in the resin composition is not particularly limited and may be adjusted, as appropriate, according to objectives. For example, when applied in a high-frequency band substrate material or an insulating material use, the spherical silica particles (X) may be blended in the range of 1-95 mass% and more preferably 10-80 mass% with respect to the total mass of the resin composition.

<Resin>

The resin composition according to the present invention comprises at least one resin selected from a thermoplastic resin and a thermosetting resin. More specifically, examples of the resin include: polyethylene resins; polypropylene resins; epoxy resins; silicone resins; phenol resins; melamine resins; urea resins; unsaturated polyester resins; fluororesins; polyamide-based resins such as polyimide resins, polyamide imide resins, and polyether imide resins; polyester-based resins such as polybutylene terephthalate resins and polyethylene terephthalate resins; polyphenylene sulfide resins; wholly aromatic polyester resins; polysulfone resins; liquid crystal polymer resins; polyether sulfone resins; polycarbonate resins; maleimide-modified resins; ABS resins; AAS (acrylonitrile-acrylic rubber-styrene) resins; AES (acrylonitrile-ethylenepropylene-diene rubber-styrene) resins; hydrocarbon-based elastomer resins; polyphenylene ether resins; aromatic polyene-based resins; and the like. The foregoing may be used alone or in a combination of two or more.

When the resin composition according to the present invention is to be used as a high-frequency band substrate material or an insulating material, it is possible to employ a known low-dielectric resin that is applied in such a use. Specifically, as the low-dielectric resin, it is possible to use at least one resin selected from hydrocarbon-based elastomer resins, polyphenylene ether resins, and aromatic polyene-based resins. Among these, a hydrocarbon-based elastomer resin or polyphenylene ether resin is preferable.

The resin composition according to the present embodiment may have a hardening agent, a hardening accelerator, a mold release agent, a coupling agent, a coloring agent, a flame retardant, an ion scavenger, or the like, blended therein in a range that does not hinder the effects of the present invention.

<Production Method of Resin Composition>

The method of producing the resin composition is not particularly limited, and the resin composition may be produced, for example, by stirring, dissolving, mixing, or dispersing prescribed amounts of each material. The devices used for mixing, stirring, dispersing, etc. these mixtures are not particularly limited, and it is possible to use a grinding machine, a three-roll mill, a ball mill, a planetary mixer, or the like, provided with devices for stirring and heating. Moreover, the foregoing devices may be used in combination, as appropriate.

As mentioned above, the resin composition containing the spherical silica particles (X) according to the present invention can achieve a low dielectric constant and a lower dielectric dissipation factor. Moreover, the resin composition containing the spherical silica particles (X) according to the present invention has low viscosity, and therefore has good flowability and also has excellent moldability.

EXAMPLES

Hereinafter, the present invention shall be explained in more detail by providing examples, but the present invention is not limited by the following descriptions.

As the spherical silica particles (A), spherical silica particles (A-1) (product name: FB-5D manufactured by Denka Company Limited; specific surface area: 2.3 m$^2$/g) and spherical silica particles (A-2) (product name: FB-3SDC manufactured by Denka Company Limited; specific surface area: 3.3 m$^2$/g) were prepared. Note that the average circularity, average particle density, average particle diameter, specific surface area, and desorbed water molecular weight of the spherical silica particles (A-1) and (A-2), as well as the dielectric constant and dielectric dissipation factor when made into resin sheets, are values measured according to the methods described below.

Table 1

|  |  | SPHERICAL SILICA PARTICLES (A-1) | SPHERICAL SILICA PARTICLES (A-1) |
|---|---|---|---|
| AVERAGE CIRCULARITY | (-) | 0.95 | 0.94 |
| AVERAGE PARTICLE DENSITY | (g/cm$^3$) | 2.2 | 2.2 |
| AVERAGE PARTICLE DIAMETER | ($\mu$m) | 4.9 | 3.1 |
| SPECIFIC SURFACE AREA | (m$^2$/g) | 2.3 | 3.3 |
| DESORBED WATER MOLECULAR WEIGHT | (mmoL/g) | 0.034 | 0.051 |

(continued)

|  |  | SPHERICAL SILICA PARTICLES (A-1) | SPHERICAL SILICA PARTICLES (A-1) |
| --- | --- | --- | --- |
| DIELECTRIC CONSTANT OF RESIN SHEET | (-) | 2.8 | 2.7 |
| DIELECTRIC DISSIPATION FACTOR OF RESIN SHEET | (-) | $8.0 \times 10^{-4}$ | $8.5 \times 10^{-4}$ |

[Example 1]

2 kg of the spherical silica particles (A-1) shown in Table 1 were added to 3 kg of pure water and stirred for 6 hours at room temperature, thereby preparing a slurry with a particle concentration of 40 mass%. This slurry was fed into a classifier (product name: SATAKE i Classifier@ standard machine manufactured by SATAKE MultiMix Corporation) for wet classification. The classification conditions were set to a rotor circumferential velocity of 26 m/s and a fine particle discharge rate of 10 L/hr. The slurry from which fine particles had been removed was decanted to remove the supernatant liquid, and the obtained spherical silica particles (B) were dried at 110°C for 24 hours. After being dried, the spherical silica particles (B) were disaggregated with a mortar, put in a 50 g alumina crucible, and heat treated in an electric furnace (product name: Hi-MULTI@ 10000 manufactured by Fujidempa Kogyo Co., Ltd.) under a nitrogen atmosphere at an electric furnace temperature of 1000°C for 4 hours. Then, after the furnace interior naturally cooled to room temperature, the spherical silica particles (X) were collected. The surface fractal dimension, specific surface area, desorbed water molecular weight, average particle diameter, average circularity, and average particle density of the obtained spherical silica particles (X) were measured with the following methods. Moreover, the surface condition of the spherical silica particles (X) was observed with the following method and the presence or absence of fine particles on the surface was confirmed. The results are shown in Table 2.

<Method of Measuring Surface Fractal Dimension>

Spherical silica particles were placed, as is, in a sample cell for transmission measurement with an X-ray diffraction analyzer (product name: SmartLab manufactured by Rigaku Corporation), and the particles were measured with an ultra-small-angle X-ray scattering (USAXS) method under the following conditions. Background subtraction and a desmearing process were performed during analysis. The desmearing process was performed using analysis software (product name: NANO-Solver: Particle size and pore size analysis software produced by Rigaku Corporation).

X-ray tube bulb: Cu K$\alpha$,

Tube voltage/tube current: 45 kV/200 mA

Detector: scintillation counter

Scanning range: 0.00-0.50 deg

Scanning step: 0.0006 deg

Scanning speed: 0.03 deg/min.

Incident-side analyzing crystals: Ge (220) $\times$ 2

Light-receiving side dispersive crystal: Ge (220) $\times$ 2

<Method of Calculating Surface Fractal Dimension>

The surface fractal dimension was calculated with the following method. First, a scattering angle 2$\theta$ was converted to a scattering vector q using the following formula (1). Note that in the following formula (1), $\lambda$ represents the wavelength (nm) of the incident X-ray, and this was set to 0.154 nm.

$$q = 4\pi\sin\theta/\lambda \ldots (1)$$

Next, a double-logarithmic graph showing the relationship between the scattering vector q and intensity I(q) was created with respect to a USAXS pattern to which the background subtraction and desmearing process were performed, and a power approximation was performed at q = 0.0124-0.0627 nm$^{-1}$ (2θ = 0.174-0.0882°). The exponent part α in the approximate formula was substituted into the following formula (2) to calculate the surface fractal dimension (Ds).

$$Ds = 6+\alpha \ldots (2)$$

<Method of Measuring Specific Surface Area>

A measurement cell was filled with 1 g of the spherical silica particles and the specific surface area of the spherical silica particles was measured using a fully automated specific surface area and diameter measuring device (product name: Macsorb HM model-1201 (BET single point method) manufactured by MOUNTECH Co., Ltd.). Note that the pre-measurement degasification conditions were set to 200°C for ten minutes.

<Method of Measuring Desorbed Water Molecule Weight>

A gas chromatograph mass spectrometer (product name: JMS-Q1500GC manufactured by JEOL Ltd.) and a pyrolysis apparatus (product name: PY-3030D manufactured by Frontier Laboratories Ltd.) were used to heat 15 μg of spherical silica particles from 50°C to 1000°C at a rate of temperature increase of 25°C/min. under a helium atmosphere. The area value of the obtained mass chromatogram (m/z = 18) in the range of 50°C to 1000°C was calculated, and the number of desorbed water molecules was calculated from a calibration curve. Note that as the calibration curve, the area value of the number of desorbed water molecules (m/z = 18) of an aluminum hydroxide sample (product name: aluminum hydroxide manufactured by Kojundo Chemical Lab. Co., Ltd.) as a reference sample was used. Specifically, 23 μg, 122 μg, and 270 μg of the aluminum hydroxide sample were accurately weighed using a microbalance and heated under the same conditions as above, and the area value of the water molecules desorbed from the aluminum hydroxide was measured, thereby creating a calibration curve. Note that the water content of the aluminum hydroxide sample was calculated with the following method. A high-sensitivity differential thermal balance (product name: STA 2500 Regulus manufactured by NETZSCH Japan K.K.) was used to measure the decrease in the amount of mass of aluminum hydroxide particles (product name: aluminum hydroxide ALI06PB manufactured by Kojundo Chemical Lab. Co., Ltd.) at 200°C to 320°C (temperature increase condition: temperature increase from room temperature (23°C) to 800°C at a rate of 10°C/min; carrier gas: air; measuring container: platinum pan; sample amount: 13 mg).

<Method of Measuring Average Circularity>

After fixing the spherical silica particles to a sample stage with carbon tape, an osmium coating was applied. Thereafter, an image with a magnification of 500-50,000 and a resolution of 1280 × 1024 pixels captured by a scanning electron microscope (JSM-7001F SHL manufactured by JEOL Ltd.) was imported into a computer. This image was analyzed using an image analysis device (product name: Image-Pro Premier Ver. 9.3 manufactured by Nippon Roper K.K.) to calculate a projected area (S) and a projected perimeter (L) of a single particle, thereby calculating the circularity from the following formula (1). Circularities were calculated for 200 arbitrary particles and the average value thereof was used as the average circularity.

$$\text{Circularity} = 4\pi S/L^2 \ldots (3)$$

<Method of Measuring Average Particle Diameter>

The average particle diameter was measured by using a laser diffraction particle size distribution measuring device (product name: LS 13 320 manufactured by Beckman Coulter, Inc.). First, 50 cm$^3$ of pure water and 0.1 g of spherical silica particles were put in a glass beaker and subjected to a dispersion treatment for one minute with an ultrasonic homogenizer (product name: SFX 250 manufactured by BRANSON). The dispersed solution of the spherical silica particles that had been subjected to the dispersion treatment was added, one drop at a time using a pipette, to the laser diffraction particle size distribution measuring device, and measurement was performed 30 seconds after a prescribed amount had been added. A particle size distribution was calculated from light intensity distribution data of diffracted/scattered light of the spherical silica particles detected by a sensor inside the laser diffraction particle size distribution measuring device. The average particle diameter was calculated from a particle diameter corresponding to a cumulative value of 50% in a volume-based cumulative particle size distribution of the measured particle diameters.

<Method of Measuring Average Particle Density>

2.0 g of the spherical silica particles were put in a sample cell for measurement, and the average particle density was measured by a gas (helium) displacement method using a dry-type density meter (product name: Accupic II 1340 manufactured by Shimadzu Corporation).

<Observation of Particle Surface>

The surface of the spherical silica particles (X) was observed with an electron microscope and the presence or absence of fine particles on the particle surface was evaluated.

(Evaluation Criteria)

Pass: fine particles have been removed from the surface of the spherical silica particles (X) and surface unevenness is reduced.
Fail: a large amount of fine particles were adhered to the surface of the spherical silica particles (X).

<Evaluation of Dielectric Properties (Dielectric Constant and Dielectric Dissipation Factor)>

The spherical silica particles (X) and a polyethylene resin powder (product name: Flothene® UF-20S manufactured by SUMITOMO SEIKA CHEMICALS CO.,LTD. ) were weighed such that the filling content of the spherical silica particles (X) is 40 vol.%, and were mixed using a vibration mixer (manufactured by Resodyn Corporation) with an acceleration rate of 60 G and a processing time of two minutes, thereby obtaining a resin composition. The obtained resin composition was fed, at an amount such that the thickness thereof is approximately 0.3 mm, into a metal frame with a diameter of 3 cm, and was rendered into a sheet by a nanoimprinting device (product name: X-300 manufactured by SCIVAX Corporation) under conditions of 30,000 N and 140°C for five minutes. The obtained sheet was cut into 1.5 cm × 1.5 cm-sized pieces, thereby obtaining evaluation samples.
Next, a 36 GHz cavity resonator (manufactured by SUMTEC Inc.) was connected to a vector network analyzer (product name: 85107 manufactured by Keysight Technologies), an evaluation sample was arranged so as to cover a 10 mm-diameter hole provided in the cavity resonator, and a resonance frequency (f0) and an unloaded Q value (Qu) were measured. After each measurement, the evaluation sample was rotated 60 degrees, and the same measurement was repeated five times. Average values of the obtained f0 and Qu values were used as measured values, and an analytical software (software manufactured by SUMTEC Inc.) was used to calculate a dielectric constant from f0 and a dielectric dissipation factor ($\tan\delta c$) from Qu. Note that the measurements were performed under conditions of a measurement temperature of 20°C and a humidity of 60% RH. The obtained dielectric constant and dielectric dissipation factor values were evaluated using the evaluation criteria below. The results are shown in Table 2.

(Evaluation Criteria)

<Dielectric Constant>

3 points: dielectric constant is 3.0 or less
2 points: dielectric constant is more than 3.0 and 3.2 or less
1 point: dielectric constant is more than 3.2 and 3.4 or less
0 point: dielectric constant is more than 3.4

<Dielectric Loss Tangent>

3 points: dielectric dissipation factor is less than $4.0 \times 10^{-4}$

2 points: dielectric dissipation factor is $4.0 \times 10^{-4}$ or more and less than $4.5 \times 10^{-4}$

1 point: dielectric dissipation factor is $4.5 \times 10^{-4}$ or more and less than $5.0 \times 10^{-4}$

0 point: dielectric dissipation factor is $5.0 \times 10^{-4}$ or more

<Overall Evaluation>

The scores for the dielectric constant and dielectric dissipation factor were totaled and the dielectric properties were evaluated in accordance with the criteria below.

Excellent: the scores of the dielectric constant and dielectric dissipation factor are both 3 points (6 points in total).

Good: one of the dielectric constant and dielectric dissipation factor is 3 points and the other is 2 points (5 points in total).

Acceptable: The scores of the dielectric constant and dielectric dissipation factor are both 2 points (4 points in total).

Unacceptable: One of the dielectric constant and dielectric dissipation factor is less than 2 points (4 points or less in total).

[Examples 2 and 3 and Comparative Examples 1-3]

Spherical silica particles (X) were prepared under the production conditions shown in Table 2. Note that Comparative Examples 1-3 are examples in which the spherical silica particles (X) were produced without step (i) (classification step). The surface fractal dimension, specific surface area, desorbed water molecular weight, average particle diameter, average circularity, and average particle density of each example of the spherical silica particles (X) were measured using the same methods as for Example 1. Moreover, the surface condition and dielectric properties of the particles were evaluated with the same methods as in Example 1. The results are shown in Table 2.

[Example 4]

Spherical silica particles (X) were produced under the production conditions shown in Table 2. 1 part by mass of hexamethyldisilazane (indicated as "HMDS" in Table 2) (product name: SZ-31 manufactured by Shin-Etsu Chemical Co., Ltd.) was added, as a surface treatment agent, to 100 parts by mass of the obtained spherical silica particles (X). Then, after mixing for two minutes with an acceleration rate of 60 G in a vibration mixer (product name: LabRAM II manufactured by Resodyn Corporation), drying was performed for 24 hours at 120°C in an environment at less than -133 Pa using a mixed powder vacuum dryer, thereby obtaining surface-treated spherical silica particles. The surface fractal dimension, specific surface area, desorbed water molecular weight, average particle diameter, average circularity, and average particle density of the obtained spherical silica particles (X) were measured using the same methods as for Example 1. Moreover, the surface condition and dielectric properties of the particles were evaluated with the same methods as in Example 1. The results are shown in Table 2.

[Example 5]

Spherical silica particles (X) were produced under the production conditions shown in Table 2. 1 part by mass of vinyltriethoxysilane (indicated as "vinyl" in Table 2) (product name: KBE-1003 manufactured by Shin-Etsu Chemical Co., Ltd.) was added, as a surface treatment agent, to 100 parts by mass of the obtained spherical silica particles (X). Then, after mixing for two minutes with an acceleration rate of 60 G in a vibration mixer (product name: LabRAM II manufactured by Resodyn Corporation), drying was performed for 24 hours at 120°C in an environment at less than -133 Pa using a mixed powder vacuum dryer, thereby obtaining surface-treated spherical silica particles (X). The surface fractal dimension, specific surface area, desorbed water molecular weight, average particle diameter, average circularity, and average particle density of the obtained spherical silica particles (X) were measured using the same methods as for Example 1. Moreover, the surface condition and dielectric properties of the particles were evaluated with the same methods as in Example 1. The results are shown in Table 2.

Table 2

| | | | | EXAMPLE 1 | EXAMPLE 2 | EXAMPLE 3 | EXAMPLE 4 | EXAMPLE 5 | COMP. EX. 1 | COMP. EX. 2 | COMP. EX. 3 |
|---|---|---|---|---|---|---|---|---|---|---|---|
| PRODUC-TION CONDI-TIONS | | SPHERICAL SILICA PARTICLES | | (A-1) | (A-1) | (A-2) | (A-1) | (A-1) | (A-2) | (A-2) | (A-2) |
| | STEP (i) | CLASSIFICATION TYPE | (-) | WET | | | | | NONE | NONE | NONE |
| | | ROTOR CIRCUM-FERENTIAL VE-LOCITY | (m/s) | 26 | 20 | 26 | 26 | 26 | NONE | NONE | NONE |
| | STEP (ii) | HEATING TEMPERATURE | (°C) | 1000 | 1000 | 1000 | 1000 | 1000 | 1000 | 1000 | 1200 |
| | | HEATING TIME | (hr) | 3 | 3 | 6 | 3 | 3 | 3 | 3 | 8 |
| | | ATMOSPHERE | (-) | NITROGEN | NITRO-GEN | NITRO-GEN | NITROGEN | NITROGEN | NITROGEN | AIR | VACUUM |
| | OTHER | SURFACE TREATMENT STEP | (-) | NONE | NONE | NONE | PRESENT HMDS | PRESENT VINYL | NONE | NONE | NONE |
| PHYSICAL PROPERTY | | SURFACE FRACTAL DIMENSION | (-) | 1.8 | 2.2 | 2.0 | 1.6 | 1.7 | 2.5 | 2.5 | 2.6 |
| | | SPECIFIC SURFACE AREA | $(m^2/g)$ | 0.7 | 1.2 | 1.8 | 0.7 | 0.7 | 3.3 | 3.2 | 3.1 |
| | | DESORBED WATER MOLECULAR WEIGHT | (mmoL/g) | 0.004 | 0.003 | 0.007 | 0.004 | 0.004 | 0.012 | 0.014 | 0.008 |
| | | AVERAGE CIRCULARITY | (-) | 0.95 | 0.95 | 0.96 | 0.95 | 0.94 | 0.95 | 0.95 | 0.90 |
| | | AVERAGE PARTICLE DEN-SITY | $(g/cm^3)$ | 2.2 | 2.2 | 2.2 | 2.2 | 2.2 | 2.2 | 2.2 | 2.3 |
| | | AVERAGE PARTICLE DI-AMETER | $(\mu m)$ | 4.1 | 5.2 | 2.5 | 4.0 | 4.5 | 4.2 | 4.4 | 5.6 |
| | | PARTICLE SURFACE CONDITION | (-) | PASS | PASS | PASS | PASS | PASS | FAIL | FAIL | FAIL |

(continued)

| | | EXAMPLE 1 | EXAMPLE 2 | EXAMPLE 3 | EXAMPLE 4 | EXAMPLE 5 | COMP. EX. 1 | COMP. EX. 2 | COMP. EX. 3 |
|---|---|---|---|---|---|---|---|---|---|
| | SPHERICAL SILICA PARTICLES | (A-1) | (A-1) | (A-2) | (A-1) | (A-1) | (A-2) | (A-2) | (A-2) |
| | DIELECTRIC CONSTANT OF RESIN SHEET (-) | 2.8 | 2.8 | 2.8 | 2.8 | 2.8 | 2.8 | 2.8 | 2.8 |
| | DIELECTRIC CONSTANT EVALUATION RESULT (POINTS) | 3 | 3 | 3 | 3 | 3 | 3 | 3 | 3 |
| EVALUATION RESULT | DIELECTRIC DISSIPATION FACTOR OF RESIN SHEET (-) | $3.8 \times 10^{-4}$ | $4.1 \times 10^{-4}$ | $4.2 \times 10^{-4}$ | $3.7 \times 10^{-4}$ | $3.8 \times 10^{-4}$ | $4.8 \times 10^{-4}$ | $5.0 \times 10^{-4}$ | $4.8 \times 10^{-4}$ |
| | DIELECTRIC DISSIPATION FACTOR EVALUATION RESULT (POINTS) | 3 | 2 | 2 | 3 | 3 | 1 | 0 | 1 |
| | (POINTS) | 6 | 5 | 5 | 6 | 6 | 4 | 3 | 4 |
| | OVERALL EVALUATION (-) | EXCELLENT | GOOD | GOOD | EXCELLENT | EXCELLENT | UNACCEPTABLE | UNACCEPTABLE | UNACCEPTABLE |

As shown in Table 1, the spherical silica particles (X) of Examples 1-5,which satisfy the congiguration of the present invention, have a lower dielectric dissipation factor than the spherical silica particles of the comparative examples. Moreover, as a result of observing these spherical silica particles (X) in Examples 1-5 with an electron microscope, it was observed that fine particles were removed from the surface of the particles. Meanwhile, Comparative Examples 1-3 with a surface fractal dimension of more than 2.3 all had a high dielectric dissipation factor in the resin sheets. The spherical silica particles of these comparative examples were particles having a large amount of foreign substances on the particle surface and high surface unevenness. Due thereto, it is believed that the amount of adsorbed water or polar functional groups on the particle surface is large and the dielectric dissipation factor became worse. From the above results, it was possible to confirm that the spherical silica particles (X) according to the present invention can achieve a lower dielectric dissipation factor when used to fill a resin.

INDUSTRIAL APPLICABILITY

The spherical silica particles (X) according to the present invention can achieve a lower dielectric dissipation factor when used to fill a resin. Such spherical silica particles can be suitably used as resin materials, for example, high-frequency band substrate materials or fillers for insulating materials.

**Claims**

1. Spherical silica particles (X) having a surface fractal dimension of 1.0-2.3.

2. The spherical silica particles (X) according to claim 1, wherein the spherical silica particles (X) have an average circularity of 0.85 or more.

3. The spherical silica particles (X) according to claim 1 or 2, wherein the spherical silica particles (X) have a specific surface area of 0.1-2.0 m$^2$/g.

4. The spherical silica particles (X) according to any one of claims 1 to 3, wherein the spherical silica particles (X) have an average particle diameter of 1-30 $\mu$m.

5. The spherical silica particles (X) according to any one of claims 1 to 4, wherein the spherical silica particles (X) are surface treated with a surface treatment agent.

6. The spherical silica particles (X) according to any one of claims 1 to 5, wherein the spherical silica particles (X) are for filling a resin.

7. A resin composition comprising the spherical silica particles (X) according to any one of claims 1 to 6 and at least one resin selected from a thermoplastic resin and a thermosetting resin.

[FIG. 1]

[FIG. 2]

## INTERNATIONAL SEARCH REPORT

| International application No. |
|---|
| **PCT/JP2022/037591** |

| A. | CLASSIFICATION OF SUBJECT MATTER |
|---|---|

*C01B 33/18*(2006.01)i
FI:   C01B33/18 E; C01B33/18 C

According to International Patent Classification (IPC) or to both national classification and IPC

| B. | FIELDS SEARCHED |
|---|---|

Minimum documentation searched (classification system followed by classification symbols)

C01B33/18

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2008-529949 A (WACKER CHEMIE AKTIENGESELLSCHAFT) 07 August 2008 (2008-08-07) claims 1, 3, paragraphs [0029]-[0030], [0032]-[0033], [0095] | 1, 3-5 |
| A | | 2, 6-7 |
| X | JP 2008-530258 A (WACKER CHEMIE AKTIENGESELLSCHAFT) 07 August 2008 (2008-08-07) claims 1, 8, paragraphs [0002], [0017] | 1, 3, 5-7 |
| A | | 2, 4 |
| A | JP 2009-096933 A (KOBE STEEL, LIMITED) 07 May 2009 (2009-05-07) paragraph [0027] | 1-7 |
| A | JP 2016-503338 A (SPECTRA SYSTEMS CORPORATION) 04 February 2016 (2016-02-04) paragraph [0043] | 1-7 |
| A | US 2014/0057108 A1 (TEXAS STATE UNIVERSITY- SAN MARCOS) 27 February 2014 (2014-02-27) entire text | 1-7 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **24 November 2022** | **13 December 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**

| International application No. |
|---|
| **PCT/JP2022/037591** |

### C. DOCUMENTS CONSIDERED TO BE RELEVANT

| Category* | Citation of document, with indication, where appropriate, of the relevant passages | Relevant to claim No. |
|---|---|---|
| A | JP 2021-038138 A (DENKA COMPANY, LIMITED) 11 March 2021 (2021-03-11) entire text | 1-7 |
| A | WO 2020/195205 A1 (DENKA COMPANY, LIMITED) 01 October 2020 (2020-10-01) entire text | 1-7 |
| A | WO 2009/072218 A1 (CATALYSTS & CHEMICALS INDUSTRIES COMPANY, LIMITED) 11 June 2009 (2009-06-11) entire text | 1-7 |

Form PCT/ISA/210 (second sheet) (January 2015)

| INTERNATIONAL SEARCH REPORT<br>Information on patent family members | | | International application No.<br>**PCT/JP2022/037591** |
|---|---|---|---|

| Patent document<br>cited in search report | Publication date<br>(day/month/year) | Patent family member(s) | Publication date<br>(day/month/year) |
|---|---|---|---|
| JP 2008-529949 A | 07 August 2008 | US 2008/0141904 A1<br>claims 1, 3, paragraphs [0033]-<br>[0034], [0038]-[0039], [0109]<br>WO 2006/087136 A2<br>EP 1848781 B1<br>KR 10-2007-0099691 A<br>CN 101120060 A | |
| JP 2008-530258 A | 07 August 2008 | US 2008/0139833 A1<br>claims 1, 8, paragraphs [0002],<br>[0030]<br>WO 2006/081979 A1<br>KR 10-2007-0100418 A<br>CN 101115794 A | |
| JP 2009-096933 A | 07 May 2009 | (Family: none) | |
| JP 2016-503338 A | 04 February 2016 | US 2014/0116474 A1<br>paragraph [0066]<br>US 2014/0299160 A1<br>US 2015/0165493 A1<br>US 2015/0217341 A1<br>WO 2014/070307 A1<br>WO 2015/157284 A1<br>KR 10-2015-0082441 A<br>CN 104918720 A | |
| US 2014/0057108 A1 | 27 February 2014 | WO 2012/148561 A2<br>entire text | |
| JP 2021-038138 A | 11 March 2021 | US 2022/0169832 A1<br>entire text<br>WO 2020/195205 A1<br>EP 3950588 A1<br>CN 113614036 A<br>KR 10-2021-0142632 A | |
| WO 2020/195205 A1 | 01 October 2020 | US 2022/0169832 A1<br>entire text<br>EP 3950588 A1<br>CN 113614036 A<br>KR 10-2021-0142632 A<br>JP 2021-38138 A | |
| WO 2009/072218 A1 | 11 June 2009 | US 2010/0247914 A1<br>entire text<br>US 2015/0251150 A1<br>EP 2228344 A1<br>KR 10-2010-0106335 A<br>JP 2009-137806 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2016031823 A
- JP 2926348 B
- JP 2020097498 A
- JP 2020138880 A

**Non-patent literature cited in the description**

- *International Materials Reviews,* 2015, vol. 60 (70